# EUROPEAN PATENT SPECIFICATION

(11) **EP 1 659 007 B1**
(45) Date of publication and mention of the grant of the patent: **22.09.2010**
(21) Application number: 05292467.7
(22) Date of filing: 22.11.2005
(51) Int. Cl.: B60G 17/015, B60G 17/052, B60G 17/016, F16F 9/04, B60G 15/12

(54) **Air suspension and electronically controlled suspension system**
Luftfederung und elektronisch gesteuertes Aufhängungssystem
Suspension pneumatique et système de suspension contrôlé électroniquement

(30) Priority: 22.11.2004 KR 2004095697
(43) Date of publication of application: 24.05.2006
(73) Proprietor: Mando Corporation, Seoul 135-739 (KR)
(72) Inventor: Kim, Jong Heon 3-404, Yanseo APT, Seoul 157-015 (KR)
(74) Representative: Bosch, Matthias

(56) References cited:
- US-A- 4 613 116
- US-A- 4 625 994
- US-A- 4 743 000
- US-A- 4 826 205
- US-B1- 6 412 759
- PATENT ABSTRACTS OF JAPAN vol. 012, no. 262 (M-721), 22 July 1988 (1988-07-22) & JP 63 046907 A (KAYABA IND CO LTD), 27 February 1988 (1988-02-27)
- PATENT ABSTRACTS OF JAPAN vol. 011, no. 180 (M-597), 10 June 1987 (1987-06-10) & JP 62 008870 A (MAZDA MOTOR CORP), 16 January 1987 (1987-01-16)
- PATENT ABSTRACTS OF JAPAN vol. 011, no. 278 (M-623), 9 September 1987 (1987-09-09) & JP 62 077211 A (NISSAN MOTOR CO LTD), 9 April 1987 (1987-04-09)

## Description

### BACKGROUND OF THE INVENTION

### 1. Field of the Invention

The present invention relates to an air suspension, and more particularly, to an air suspension and an electronically controlled suspension (ECS) system, wherein when a lateral motion occurs in a vehicle mounted with an air suspension, the movement of the vehicle can be rapidly and efficiently stabilized.

### 2. Description of the Related Art

Generally, a suspension for a vehicle is provided to absorb a shock transmitted from a road, thereby improving ride comfort, travel stability and a cornering characteristic. Such suspensions include an air suspension mounted on a large-sized vehicle such as a bus.

Since an air suspension employs an air spring using elasticity of compressed air, it can exhibit superior ride comfort due to its flexible elasticity and absorption of minute vibration and also consistently maintain a ride height regardless of a load by controlling the pressure of the compressed air. According to a tendency toward a higher-grade vehicle, the use of the air suspension rapidly increases such as application thereof to a recreational vehicle.

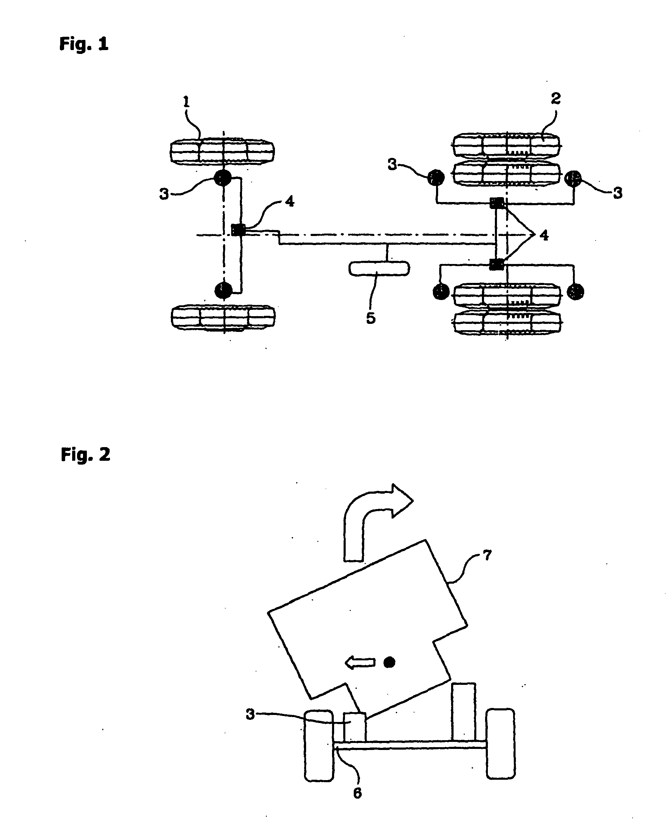

Fig. 1 is a view showing the configuration of an air supply line of a conventional air suspension for a vehicle, in which air springs are installed between a vehicle body (frame) and axles to absorb vibration generated when the vehicle travels.

A total of six air springs 3, including a pair of air springs at front wheels 1 and a pair of air springs in front of and at the rear of each of rear wheels 2, are installed in the vehicle. These air springs 3 receive compressed air from an air tank 5 through connection pipes. Leveling valves 4, including one for the front wheels and two for the rear wheels, are installed at the connection tubes to regulate the amount of air within the air springs 3, so that behaviors of the vehicle (restoration from an inclined state, and upward movement from a downward moved state) can be controlled.

Meanwhile, when a lateral motion is produced at the vehicle due to cornering, a roll phenomenon in which a vehicle body 7 is inclined radially outward with respect to a cornering path due to the centrifugal force occurs as shown in Fig. 2. Such a roll phenomenon causes deterioration of ride comfort and travel stability. To avoid the occurrence of the roll phenomenon, air springs at a declined side are supplied with compressed air from the air tank through the leveling valves, and air is discharged from air springs at an opposite side, thereby preventing the vehicle from being excessively slanted.

However, in view of features of a pneumatic device, the conventional air suspension does not have a response rapid enough to respond to a lateral motion produced for a short period of time, resulting in insignificant control benefits. Even in a case where the occurrence of the lateral motion is terminated and the vehicle should return to a normal travel condition, there is a problem in that it takes a great deal of time to achieve lateral balance by rapidly equalizing pressure within the right and left air springs, thereby deteriorating the motional performance of the vehicle.

To solve these problems, it may be considered that both a pneumatic circuit capable of simultaneously supplying and discharging air and a pneumatic circuit capable of equalizing pressure in the right and left air springs upon control restoration are installed at the air springs. However, this solution causes a problem in that a pneumatic circuit is complicated and costs of the air suspension increase.

US patent application US 4,625,994 discloses an electronically controlled suspension system comprising an air suspension including a volume expander connected to a pressure acting volume of an air spring to expand the pressure acting volume, and a volume control valve for opening or closing the connection between the pressure acting volume and the volume expander; an electronic control unit for generating a valve control signal based on a steering angular velocity and a vehicle speed of a vehicle; and an air spring volume adjustor for controlling a spring rate of the air spring through adjustment of the pressure acting volume of the air spring by opening or closing the volume control valve in response to the valve control signal.

US patent application US 4,613,116 discloses an air suspension comprising a shock absorber, first and second air chambers surrounding the shock absorber, a valve for affording and shutting off communication between the first and second air chambers and operating means for operating the valve.

### SUMMARY OF THE INVENTION

The present invention is conceived to solve the aforementioned problems in the prior art.

An object of the present invention is to provide an electronically controlled suspension system, wherein when a lateral motion occurs in a vehicle mounted with an air suspension, a spring rate of an air spring of the air suspension is controlled to rapidly and efficiently stabilize the movement of the vehicle.

According to the present invention, there is provided an electronically controlled suspension system, comprising an air suspension including a volume expander connected to a pressure acting volume of an air spring to expand the pressure acting volume, and a volume control valve for opening or closing the connection between the pressure acting volume and the volume expander; an electronic control unit for generating a valve control signal by means of anti-roll control logic based on a steering angular velocity and a vehicle speed of a vehicle; and an air spring volume adjustor for controlling a spring rate of the air spring through adjustment of the pressure acting volume of the air spring by opening or closing the volume control valve in response to the valve control signal the suspension system being such that the spring rate of an air spring at a declined side of the vehicle is increased by instantaneously closing the volume control valve (17) connected to said air spring, while the spring rate of an air spring at a side opposite to said declined side of the vehicle is decreased by instantaneously opening the volume control valve (17) connected to said air spring, thereby preventing the vehicle from being excessively slanted.

### BRIEF DESCRIPTION OF THE DRAWINGS

The above and other objects, features and advantages of the present invention will become apparent from the following description of preferred embodiments given in conjunction with the accompanying drawings, in which:
Fig. 1 is a view showing the configuration of an air supply line of a conventional air suspension for a vehicle;
Fig. 2 is a view showing a state where a roll phenomenon occurs when a vehicle is cornering;
Fig. 3 is a sectional view showing the structure of an air spring employed in an air suspension according to the present invention;
Fig. 4 is a block diagram showing the configuration of an electronically controlled suspension system according to the present invention; and
Fig. 5 is a timing chart illustrating waveforms of valve control signals output from an electronic control unit in the electronically controlled suspension system according to the present invention.

### DESCRIPTION OF THE PREFERRED EMBODIMENT

Hereinafter, preferred embodiments of the present invention will be described in detail with reference to the accompanying drawings. The objects, features and advantages of the present invention will be better understood through the embodiments. However, the present invention is not limited to the embodiments.

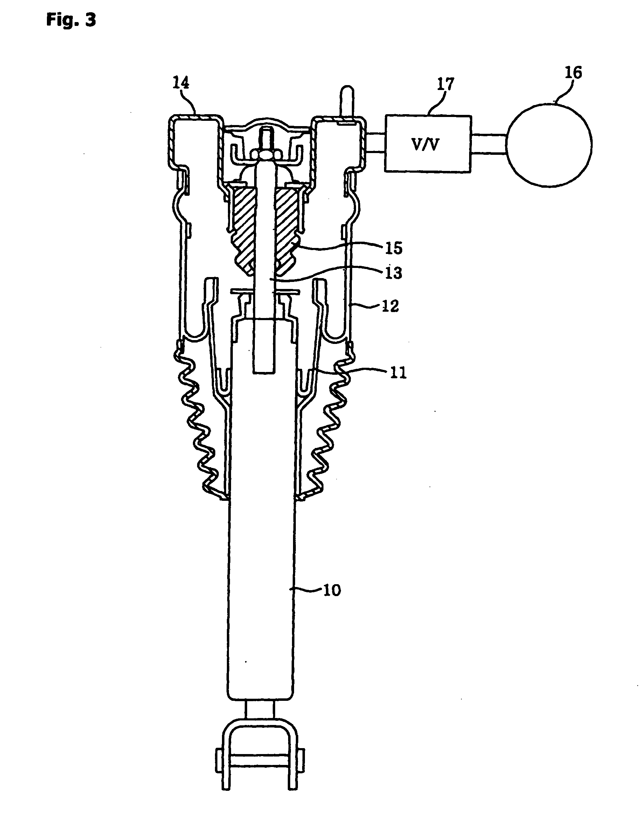

Fig. 3 is a sectional view showing the structure of an air spring employed in an air suspension according to the present invention. Referring to the structure, the air spring comprises a damper 10 as a vibration-proof and shock-absorbing device installed between a vehicle body and an axle of a vehicle to absorb a vibration or shock that the axle receives from a road when the vehicle travels; a cylindrical air piston 11 concentrically installed outside the damper 10; a rubber tube 12 airtightly coupled to an upper end of the air piston 11 to function as an air spring; a cap 14 airtightly coupled to an upper portion of the rubber tube 12 and coupled to an upper end of a piston rod 13 of the damper 10 through a joint; an air port (not shown) for use in supplying compressed air from an air supply means (not shown) to the air piston 11; a volume expander 16 attached to the outside of the cap 14 and connected to the inside of the rubber tube 12 to expand a pressure acting volume of the air spring; and a volume control valve 17 for opening or closing the connection between the inside of the rubber tube 12 and the volume expander 16 to determine the pressure acting volume of the air spring.

The volume expander 16 expands the inner pressure acting volume of the air spring so that a natural frequency of the air spring can be implemented to be a natural frequency lower than that of a coil spring. The volume expander 16 is additionally attached to the cap 14 such that it does not suffer from interference with other parts when mounted in a narrow space such as an engine room of the vehicle.

In the air spring constructed as above, the rubber tube 12 is filled with the compressed air introduced through the air port (not shown) and performs a vibration attenuating function while performing the function of the air spring in which the rubber tube 12 moves in an upward and downward direction when the piston rod 13 is repeatedly extended and retracted according to the travel of the vehicle.

Referring together to Fig. 1, the air port (not shown) of the air spring is connected through the leveling valves 4 to the air tank 5 that is the air supply means. When the rubber tube 12 is compressed due to a high load exerted on the vehicle, the compressed air is introduced into the rubber tube from the air tank 5 so that the rubber tube 12 can be restored.

To prevent the roll phenomenon in which the vehicle body 7 is inclined radially outward with respect to a cornering path due to the centrifugal force occurs when a lateral motion is produced at the vehicle due to cornering, a conventional method comprises supplying or discharging the compressed air from the air tank to or from the air spring by controlling the leveling valve 4, whereas the present invention controls the spring rate of the air spring through adjustment of the pressure acting volume of the air spring by opening or closing the volume control valve 17. That is, an air spring at a declined side has a higher spring rate through reduction of a pressure acting volume of the air spring by instantaneously closing the volume control valve 17, while an air spring at an opposite side has a lower spring rate through expansion of a pressure acting volume of the air spring by means of the volume expander 16 by instantaneously opening the volume control valve 17, thereby preventing the vehicle from being excessively slanted.

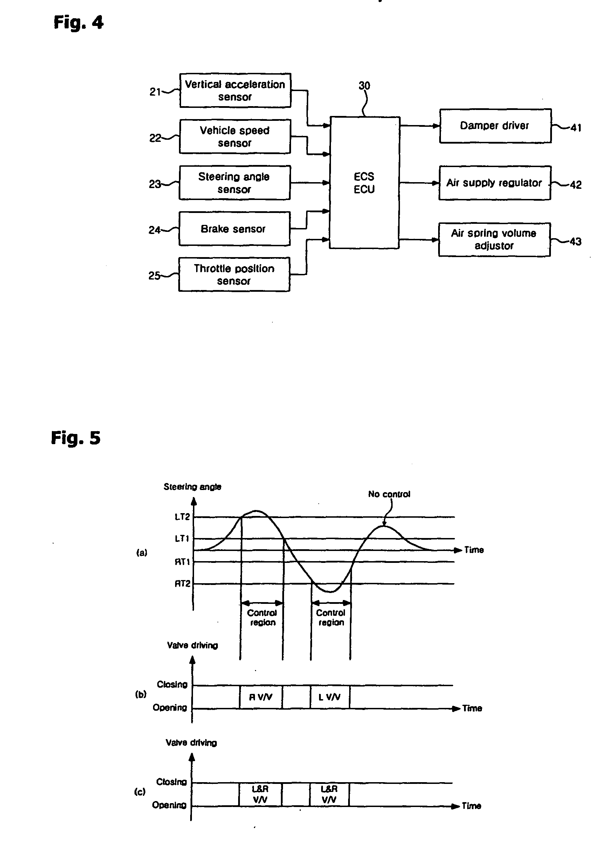

An electronically controlled suspension system employing the aforementioned air suspension can be implemented to have a configuration shown in a block diagram of Fig. 4. Referring to the configuration, the electronically controlled suspension system comprises vertical acceleration sensors 21 attached to the vehicle body above respective road wheels to measure behaviors of the road wheels, a vehicle speed sensor 22, a steering angle sensor 23, a brake sensor 24, a throttle position sensor 25, an electronic control unit (ECS ECU) 30, a damper driver 41 for controlling damping forces of dampers installed between the vehicle body and respective axles based on damping force control signals from the electronic control unit 30, an air supply regulator 42 for supplying or discharging the compressed air from the air tank to the rubber tube of the air spring based on an air supply control signal from the electronic control unit 30, and an air spring volume adjustor 43 for controlling the spring rate of the air spring through adjustment of the pressure acting volume of the air spring by opening or closing the volume control valve of the air spring based on a valve control signal from the electronic control unit 30.

The electronically controlled suspension system constructed as above improves ride comfort and control stability by causing the damper driver 41 to change motional characteristics of the damper 10 in real time in response to a damping force control signal generated by the electronic control unit 30 according to information from a variety of sensors 21 to 25. That is, the damper 10 is a continuous variable damper in which a variable valve is attached to a side of the damper 10 and two damping control valves are installed in a variable valve assembly to separately control damping forces in extension/compression strokes.

The air supply regulator 42 fills the compressed air into the rubber tube 12 of the air spring through the air port (not shown) in response to the air supply control signal generated by the electronic control unit 30 based on information from a variety of sensors 21 to 25, thereby performing the vibration attenuating function while performing the function of the air spring in which the rubber tube 12 moves in an upward and downward direction when the piston rod 13 is repeatedly extended and retracted according to the travel of the vehicle. In addition, when the rubber tube 12 is compressed due to a high load exerted on the vehicle, the compressed air is introduced into the rubber tube from the air tank 5 so that the rubber tube 12 can be restored.

Meanwhile, the electronic control unit 30 is implemented with a control algorithm for performing ride comfort control logic and anti-roll control logic. The ride comfort control logic implements sky-hook control by changing a damping mode into a hard/soft mode through an extension variable valve of the damper 10 during an extension stroke in which the vehicle body is raised, and into a soft/hard mode through an compression variable valve during a compression stroke in which the vehicle body is lowered, thereby improving ride comfort through control of the movement of the vehicle. The anti-roll control logic suppresses a roll motion of the vehicle by increasing a damping force of the damper 10 when the vehicle is steered. To sense steering input from a driver and control a transient region of the behavior of the vehicle, the anti-roll logic detects a steering angular velocity by receiving a signal from a steering angle sensor 23, and also detects a variation in a lateral accelerator and a roll value in consideration of the steering angular velocity and a vehicle speed from the vehicle speed sensor 22, thereby controlling the damping force of the damper 10.

Further, when the occurrence of a lateral motion due to the cornering of the vehicle as shown in Fig. 2 is detected, the electronic control unit 30 employing the anti-roll control logic outputs a valve control signal for use in controlling the volume control valve 17 to prevent the occurrence of the roll phenomenon in which the vehicle body 7 is inclined radially outward with respect to a cornering path due to the centrifugal force.

Then, in response to the valve control signal from the electronic control unit 30, the air spring volume adjustor 43 increases a spring rate of an air spring at a declined side through reduction of the pressure acting volume of the air spring by instantaneously closing the volume control valve 17, while decreasing a spring rate of an air spring at an opposite side through expansion of a pressure acting volume of the air spring by means of the volume expander 16 by instantaneously opening the volume control valve 17, thereby preventing the vehicle from being excessively slanted.

Further, in setting a threshold for the output of the valve control signal by the electronic control unit 30, the threshold may have a variable value according to a vehicle speed or other vehicle conditions. Termination timing of the control of the spring rate of the air spring by opening or closing the volume control valve 17 is determined by comparing a threshold with another threshold slightly lower than a previously used threshold, thereby preventing frequent control due to hysteresis.

For better understanding of the process of opening or closing the volume control valve 17 by the electronic control unit 30, the operation thereof will be described with reference to Fig. 5.

A description will be made by way of example in connection with a downhill test in which a vehicle passes by obstacles arranged at a predetermined interval by using sine wave-shaped steering as shown in Fig. 5 (a). Upper thresholds LT2 and RT2 and lower thresholds LT1 and RT1 are set for both rightward steering R and leftward steering L, respectively.

As shown in Fig. 5 (b), if a steering input value obtained from the steering angle sensor 23 exceeds the upper threshold LT2 of the leftward steering, the volume control valves 17 for front and rear right road wheels are closed. When each of the volume control valves 17 is closed, the inner volume of the air spring is reduced and the air spring is compressed by an amount in stroke corresponding to the reduction of the volume, so that a larger reaction force is obtained as compared with when the volume control valve 17 was previously opened. That is, when the volume control valve 17 is closed, the stiffness of the air spring increases.

If the volume control valve 17 is closed again when a steering input value obtained from the steering angle sensor 23 goes below the upper threshold LT2 of the leftward steering, excessively frequent control of the valve is made when the steering input value is maintained or fluctuated in the vicinity of the upper threshold. To prevent this, the lower threshold LT1 for the leftward steering is applied. That is, even though the steering input value goes below the upper threshold LT2 for the leftward steering, the closed state of the volume control valve 17 is continuously maintained. The closed volume control valve 17 is not opened until the steering input value goes below the lower threshold LT1 for the leftward steering.

Likewise, if a steering input value obtained from the steering angle sensor 23 exceeds the upper threshold RT2 of the rightward steering, the volume control valves 17 for front and rear left road wheels are closed. When each of the volume control valves 17 is closed, the inner volume of the air spring is reduced and the air spring is compressed by an amount in stroke corresponding to the reduction of the volume, so that a larger reaction force is obtained as compared with when the volume control valve 17 was previously opened. That is, when the volume control valve 17 is closed, the stiffness of the air spring increases.

If the volume control valve 17 is closed again when a steering input value obtained from the steering angle sensor 23 goes below the upper threshold RT2 of the rightward steering, excessively frequent control of the valve is made when the steering input value is maintained or fluctuated in the vicinity of the upper threshold. To prevent this, the lower threshold RT1 for the rightward steering is applied. That is, even though the steering input value goes below the upper threshold RT2 for the rightward steering, the closed state of the volume control valve 17 is continuously maintained. The closed volume control valve 17 is not opened until the steering input value goes below the lower threshold RT1 for the rightward steering.

Although the above description given with reference to Fig. 5 has been made by way of example in connection with the control process based on the steering input value obtained from the steering angle sensor 23, for the purpose of description of the control principle of the electronic control unit 30, it will be apparent that any signals of a lateral acceleration sensor or other types of sensors may be used. The present invention is to increase the stiffness of an air suspension, based on input from a certain device when roll control is needed.

Although the present invention has been described in connection with the embodiments, it is obvious that those skilled in the art can easily make various modifications and changes thereto.

The above description has been made by way of example in connection with Fig. 5 (b) illustrating the embodiment in which the stiffness of the air suspension is increased by opening or closing either one of the volume control valves for the right and left road wheels when roll control is needed. However, the opening or closing control of the volume control valve only at one side may cause instability of a vehicle. Therefore, as shown in Fig. 5 (c), it is also possible to perform the opening or closing control of all the volume control valves for the right and left road wheels when roll control is needed, so that the stiffness of the air suspensions for all the road wheels can be increased, thereby stabilizing the movement of the vehicle.

As described above, the present invention is to control a spring rate of an air spring by adjusting a pressure acting volume of the air spring using a fast response valve. According to the present invention, there is an advantage in that when a lateral motion occurs at a vehicle mounted with an air suspension, a spring rate of an air spring is controlled to rapidly and efficiently stabilize the movement of the vehicle.

## Claims

1. An electronically controlled suspension system comprising:
an air suspension including a volume expander (16) connected to a pressure acting volume of an air spring to expand the pressure acting volume, and a volume control valve (17) for opening or closing the connection between the pressure acting volume and the volume expander (16);
an electronic control unit (30) for generating a valve control signal by means of anti-roll control logic based on a steering angular velocity and a vehicle speed of a vehicle; and
an air spring volume adjustor (43) for controlling a spring rate of the air spring through adjustment of the pressure acting volume of the air spring by opening or closing the volume control valve (17) in response to the valve control signal, the suspension system being **characterized in that** the spring rate of an air spring at a declined side of the vehicle is increased by instantaneously closing the volume control valve (17) connected to said air spring, while the spring rate of an air spring at a side opposite to said declined side of the vehicle is decreased by instantaneously opening the volume control valve (17) connected to said air spring, thereby preventing the vehicle from being excessively slanted.

2. The system as claimed in claim 1, **characterized in that** a threshold for use in outputting the valve control signal by the electronic control unit (30) has a variable value according to the vehicle speed or other vehicle conditions.

3. The system as claimed in claim 1, **characterized in that** termination timing of the control of the spring rate of the air spring by the electronic control unit (30) is determined by comparing a threshold with another threshold slightly lower than a previously used threshold.

## Patentansprüche

1. Elektronisch gesteuertes Aufhängungssystem, das aufweist:
eine Luftfederung mit einer Volumenerweiterungseinrichtung (16), die mit einem Druckvolumen einer Luftfeder verbunden ist, um das Druckvolumen zu erweitern, und einem Volumensteuerventil (17) zum Öffnen oder Schließen der Verbindung zwischen dem Druckvolumen und der Volumenerweiterungseinrichtung (16);
eine elektronische Steuereinheit (30) zum Erzeugen eines Ventilsteuersignals mittels einer Stabilisationssteuerlogik basierend auf einer Lenkwinkelfrequenz und einer Fahrzeuggeschwindigkeit eines Fahrzeugs; und
eine Luftfedervolumen-Einstellvorrichtung (43) zum Steuern der Federrate der Luftfeder durch Einstellen des Druckvolumens der Luftfeder durch Öffnen oder Schließen des Volumensteuerventils (17) im Ansprechen auf das Volumensteuersignal, wobei das Aufhängungssystem **dadurch gekennzeichnet ist, dass** die Federrate einer Luftfeder an einer geneigten Seite des Fahrzeugs durch sofortiges Schließen des Volumensteuerventils (17), das mit der Luftfeder verbunden ist, erhöht wird, während die Federrate einer Luftfeder an der der geneigten Seite gegenüberliegenden Seite des Fahrzeugs durch sofortiges Öffnen des Volumensteuerventils (17), das mit der Luftfeder verbunden ist, verringert wird, wodurch verhindert wird, dass das Fahrzeug in übermäßige Schräglage gelangt.

2. System nach Anspruch 1, **dadurch gekennzeichnet, dass** ein Schwellenwert zur Verwendung beim Ausgeben des Ventilsteuersignals durch die elektronische Steuereinheit (30) einen variablen Wert gemäß der Fahrzeuggeschwindigkeit oder anderen Fahrzeugbedingungen hat.

3. System nach Anspruch 1, **dadurch gekennzeichnet, dass** die Wahl des richtigen Zeitpunkts zum Beenden der Steuerung der Federrate der Luftfeder durch die elektronische Steuereinheit (30) durch Vergleichen eines Schwellenwerts mit einem anderen Schwellenwert bestimmt wird, der etwas niedriger ist, als ein vorher verwendeter Schwellenwert.

## Revendications

1. Système de suspension à commande électronique comprenant :
une suspension pneumatique incluant un dilatateur de volume (16) connecté à un volume agissant sur la pression d'un ressort pneumatique pour dilater le volume agissant sur la pression, et une soupape de commande de volume (17) pour ouvrir ou fermer la connexion entre le volume agissant sur la pression et le dilatateur de volume (16) ;
une unité de commande électronique (30) pour générer un signal de commande de soupape au moyen d'une logique de commande antiroulis sur la base d'une vélocité angulaire de braquage et d'une vitesse de véhicule d'un véhicule ; et
un régleur de volume de ressort pneumatique (43) pour commander une constante de rappel de ressort du ressort pneumatique par l'intermédiaire d'un réglage du volume agissant sur la pression du ressort pneumatique en ouvrant ou en fermant la soupape de commande de volume (17) en réponse au signal de commande de soupape, le système de suspension étant **caractérisé en ce que** la constante de rappel de ressort d'un ressort pneumatique au niveau d'un côté penché du véhicule est augmentée en fermant instantanément la soupape de commande de volume (17) connectée audit ressort pneumatique, tandis que la constante de rappel de ressort d'un ressort pneumatique au niveau d'un côté opposé audit côté penché du véhicule est diminuée en ouvrant instantanément la soupape de commande de volume (17) connectée audit ressort pneumatique, empêchant ainsi que le véhicule ne soit excessivement incliné.

2. Système selon la revendication 1, **caractérisé en ce qu'**un seuil destiné à une utilisation dans la délivrance en sortie du signal de commande de soupape par l'unité de commande électronique (30) a une valeur variable en fonction de la vitesse du véhicule ou d'autres conditions du véhicule.

3. Système selon la revendication 1, **caractérisé en ce qu'**un instant de fin de la commande de la constante de rappel de ressort du ressort pneumatique par l'unité de commande électronique (30) est déterminé en comparant un seuil avec un autre seuil légèrement inférieur à un seuil utilisé auparavant.
